**Europäisches Patentamt**

**European Patent Office**

**Office européen des brevets**

(11) Veröffentlichungsnummer : **0 361 073 B1**

# (12) EUROPÄISCHE PATENTSCHRIFT

(45) Veröffentlichungstag der Patentschrift :
**22.04.92 Patentblatt 92/17**

(21) Anmeldenummer : **89115415.5**

(22) Anmeldetag : **21.08.89**

(51) Int. Cl.⁵ : **A47J 31/54, H01H 23/28**

---

(54) **Brühgetränkemaschine mit einem in zwei Leistungsstufen betreibbaren elektrischen Durchlauferhitzer.**

---

(30) Priorität : **09.09.88 DE 3830633**

(43) Veröffentlichungstag der Anmeldung :
**04.04.90 Patentblatt 90/14**

(45) Bekanntmachung des Hinweises auf die
Patenterteilung :
**22.04.92 Patentblatt 92/17**

(84) Benannte Vertragsstaaten :
**AT CH DE ES FR GB IT LI NL SE**

(56) Entgegenhaltungen :
**EP-A- 0 186 097**
**DE-A- 2 839 140**
**GB-A- 2 011 725**

(73) Patentinhaber : **Braun Aktiengesellschaft**
**Rüsselsheimer Strasse 22**
**W-6000 Frankfurt/Main (DE)**

(72) Erfinder : **Schiebelhuth, Heinz**
**An der Nachtweide 17**
**W-6000 Frankfurt 50 (DE)**

## Beschreibung

Die Erfindung betrifft eine Brühgetränkemaschine nach dem Oberbegriff des Patentanspruchs 1 oder des Patentanspruchs 9.

Derartige Brühgetränkemaschinen, die insbesondere zur Herstellung von Filterkaffee dienen, sind aus der Programmübersicht Frühjahr '88 der Braun AG in Rüsselsheimer Str. 22, 6000 Frankfurt/Main (Erscheinungsdatum: April 1988), bekannt und auf Seite 32 dieser Druckschrift unter den Modell-Nr. KF 45, KF 65 und KF 75 aufgeführt.

Kaffeemaschinen dieser Bauart sind heute allgemein üblich. Ihr grundsätzlicher Aufbau und ihre Funktionsweise ist beispielsweise in dem DE-U-78 09 444 beschrieben. Sie enthalten einen Kaltwassertank, aus dem das Wasser zunächst in einen einen elektrischen Heizwiderstand aufweisenden Durchlauferhitzer gelangt. In letzterem wird das Wasser auf die Brühtemperatur erhitzt und über ein Steigrohr einem Kaffeemehl enthaltenden Filtertrichter zugeleitet, aus dem der Kaffee dann in eine darunterstehende Warmhaltekanne fließt. Um den Kaffee während des Brühens und auch danach auf der erwünschten höheren Trinktemperatur zu halten, steht die Kaffeekanne dabei auf einer Warmhalteplatte, zu deren Erwärmung ebenfalls der Heizwiderstand des Durchlauferhitzers genutzt wird. Damit der Heizwiderstand die ihm dabei zukommende Doppelfunktion erfüllen kann, nämlich neben der Wassererhitzung auch den zubereiteten Kaffee innerhalb eines bestimmten Temperaturbereichs warmzuhalten, wird er durch einen temperaturgesteuerten, mit dem Durchlauferhitzer thermisch gekoppelten Regler - im allgemeinen ein Bimetallregler - aus- bzw. eingeschaltet, sobald er eine vor gesehene Höchst- bzw. Mindesttemperatur über- bzw. unterschreitet.

Die genannten Kaffeemaschinen-Typen sind mit zwei jeweils zwei Schaltstellungen aufweisenden Schaltern versehen, wobei der erste Schalter als "Hauptschalter" dazu dient, je nach seiner Schaltstellung die Kaffeemaschine entweder mit der Netzspannung zu verbinden oder davon zu trennen. Der zweite, als "Kleinmengenschalter" bezeichnete Schalter wird dann in seine Einschaltstellung gebracht, wenn der Benutzer der Kaffeemaschine nur kleine Mengen Kaffee herstellen will. Zu diesem Zweck kann eine elektrische Schaltung, wie sie entweder aus Fig. 4 der DE-OS 28 39 140 oder aus Fig. 1 der EP-Al-0 186 097 bekannt ist, verwendet werden.

Die aus der DE-OS 28 39 140 bekannte Schaltung arbeitet dabei nach folgendem Prinzip: Durch Schließen des zweiten Schalters wird bei geöffnetem ersten Schalter in den Schaltkreis für die Spannungsversorgung des Heizwiderstands zwischen letzterem und der Wechselspannungsquelle eine Diode geschaltet, so daß der Heizwiderstand nur im Halbwellenbetrieb arbeitet und daher nur seine halbe Nennleistung abgibt. Dadurch wird sowohl die Dauer des Brühvorgangs verlängert als auch die Warmhalteplatte nach der Beendigung des Brühvorgangs mit einer geringeren Heizleistung beheizt. Auf diese Weise wird auch bei der Zubereitung kleiner Kaffeemengen durch die längere Aufbrühzeit das Aroma des Kaffeemehls voll genutzt und zum anderen der Kaffee nach seiner Herstellung aromaschonend warmgehalten.

Bei der aus der EP-Al-0 186 097 bekannten Schaltung sind für den Kleinmengenbetrieb sowohl der erste als auch der zweite Schalter zu schließen. Dabei wird der thermisch mit den Heizwiderstand gekoppelte Regler dann, wenn er sich aufgrund seiner angestiegenen

Temperatur geöffnet hat, durch eine Hilfsheizung beheizt, wodurch er sich erst zu einem späteren Zeitpunkt wieder schließt, als es ohne Hilfsheizung geschehen würde. Dadurch verlängern sich die Zeitintervalle, während derer der Heizwiderstand praktisch keine Leistung abgibt.

Unabhängig davon, ob bei den vorgenannten Kaffeemaschinentypen entweder die aus der EP-Al-0 186 097 oder die aus der DE-OS 28 39 140 bekannte oder eine andere Schaltung verwendet wird, bei der durch den Halbwellenbetrieb ebenfalls eine Halbierung der vom Heizwiderstand abgegebenen Leistung eintritt, weist der erste Schalter eine Kontrollampe auf, die dann aufleuchtet, wenn dieser in seiner Einschaltstellung ist. Eine zweite Kontrollampe, die die Schaltstellung des für den Kleinmengenbetrieb verwendeten Schalters anzeigen kann, wurde bisher nicht vorgesehen.

Der Grund dafür liegt darin, daß bei allen Schaltungsvarianten eine Entkoppelung des Anzeigezustandes der beiden Lampen in Abhängigkeit von der Schaltstellung beider Schalter nach dem Stand der Technik nur unter Verwendung zusätzlicher, sogenannter "Entkopplungsdioden" erreicht werden konnte. Der Einbau von weiteren Dioden ist neben den dadurch entstehenden, höheren Kosten für die Bauteile selbst auch mit höheren Kosten bei der Herstellung der entsprechenden Schaltkreise und damit mit der Inkaufnahme von erheblichen Nachteilen verbunden.

Es war daher Aufgabe der Erfindung, für beide Schaltungsvarianten auch für den zweiten, sogenannten Kleinmengenschalter eine Kontrollampe vorzusehen, die nur dann aufleuchtet, wenn dieser Schalter zur Herstellung kleiner Kaffeemengen geschlossen wird, ohne daß dazu weitere Dioden oder andere stromsperrende Bauelemente verwendet werden müssen.

Die Lösung dieser Aufgabe erfolgt für eine Brühgetränkemaschine nach dem Oberbegriff des Patentanspruchs 1 oder 9 mit den im kennzeichnenden Teil des betreffenden Patentanspruchs angegebenen Mitteln.

Beiden Ausführungsformen (Ansprüche 1 und 9) der Erfindung ist gemeinsam, daß eine Entkoppelung zwischen den Anzeigenzuständen der beiden Kontrollampen bereits dadurch erreicht wird, daß der zweite Anschluß der betreffenden Kontrollampe im offenen Zustand des ihr zugeordneten Schalters blind endet und erst mit dem Schließen des Schalters mit der ihm zugeordneten Stromleitung (Haupt- oder Nebenstromleitung) verbunden wird.

Ohne zum Zwecke der Entkopplung der Anzeigezustände der beiden Kontrollampen zusätzliche Dioden verwenden zu müssen, geben also die beiden Kontrollampen bei der erfindungsgemäßen Schaltung nach Patentanspruch 1 den jeweiligen Schaltzustand des ihnen zugeordneten Schalters wieder. D.h., daß für den Fall, daß nur der erste bzw. zweite Schalter geschlossen ist, auch nur die erste bzw. zweite Kontrollampe aufleuchtet.

Neben dem Vorteil des Wegfalls zweier Dioden und der damit verbundenen Einsparung an Material- und Fertigungskosten lassen sich vorteilhafterweise für die beiden Schalter handelsübliche Standardschalter mit zwei Kontaktflächen verwenden, die um einen Zusatzkontakt erweitert werden. Der betreffende Schalter läßt sich dann besonders einfach ausführen (Anspruch 2 bzw. Anspruch 6), wenn zuerst der zweite Anschluß der betreffenden Kontrollampe mit der Neben- bzw. Hauptstromleitung verbunden wird, bevor beide zusammen mit dem zweiten Pol der Spannungsquelle verbunden werden.

In einer Weiterbildung der Erfindung (Anspruch 3) ist es vorteilhaft, daß die Nebenstromleitung mit der zweiten Kontaktfläche und der zweite Pol der Spannungsquelle mit der ersten Kontaktfläche des zweiten Schalters verbunden ist, daß die beiden Kontaktflächen durch die Bewegung eines elektrisch leitenden Schaltgliedes in Verbindung gebracht werden können und daß der Zusatzkontakt aus einer mit dem zweiten Anschluß der zweiten Kontrollampe elektrisch verbundenen Kontaktfeder besteht, die in den Bewegungsbereich des Schaltgliedes hineinragt und die bei Bewegung des Schaltgliedes in Schließrichtung des zweiten Schalters am Schaltglied federnd zur Anlage gelangt, bevor das Schaltglied die erste mit der zweiten Kontaktfläche verbindet. Da der Zusatzkontakt als einzelnes Bauteil leicht in den Schalter integriert werden kann, ist es möglich, mit geringer Abänderung bereits serienmäßig auf dem Markt vertriebene Schalter zu verwenden. Durch diese Anordnung können auf besonders einfache Weise Schalter mit einer Leuchtanzeige unter Vermeidung der Verwendung von zusätzlichen Dioden in Kaffeemaschinen oder sonstigen Haushaltsgeräten eingesetzt werden, so daß durch die zusätzliche Leuchtanzeige Fehlbedienungen bei sonst nicht leuchtenden Schaltern an Haushaltsgeräten vermieden werden, d.h., die Leuchtanzeige gibt immer der Bedienungsperson Auskunft darüber, ob bei Kaffeemaschinen der Kleinmengenschalter ein- oder ausgeschaltet ist. Der mit der Schaltbrücke des Schalters in Verbindung bringbare Schaltpunkt der Kontaktfeder ragt so in den Schaltweg ein, daß zunächst die Kontaktfeder mit dem Schaltglied in Berührung gelangt, bevor das Schaltglied den Schalter kurzschließt. Damit die Kontaktfeder stets die gleiche Stellung zum Schaltglied auch nach zahlreichen Schaltvorgängen beibehält, ist die Kontaktfeder im Gehäuse des zweiten Schalters ortsfest befestigt und mit dem zweiten Anschluß der zweiten Kontrollampe verbunden. Der serienmäßig verwendete Schalter benötigt lediglich eine Aufnahme vorrichtung für die Kontaktfeder und eine zusätzliche Verbindung zur Kontrollampe, was ohne prinzipielle Änderung des Schalters leicht möglich ist.

Besonders einfach wird der Schalter (Anspruch 4), wenn die Befestigung der Kontaktfeder an der mit dem zweiten Anschluß verbindbaren, im zweiten Schalter ausgebildeten Kontaktklemme erfolgt, wenn hierzu die Kontaktklemme des zweiten Schalters eine Öffnung aufweist, wenn in der Öffnung ein elektrisch isolierender, gummielastischer Stopfen befestigt ist und wenn der Stopfen eine Bohrung aufweist, in der die Kontaktfeder befestigt ist. Die ohnehin vorhandene Kontaktklemme zur Energieversorgung der Kontrollampe wird lediglich mit einer Bohrung versehen, in die dann ein mit der Kontaktfeder verbundener Stopfen eingeknöpft wird. Anschließend wird dann die Kontaktfeder mit dem zweiten Anschluß stromleitend verbunden.

Um zusätzliche Befestigungsmittel zwischen der Kontaktklemme, dem Stopfen und der Kontaktfeder zu vermeiden, ist die Kontaktfeder reibschlüssig in dem aus gummielastischem Werkstoff bestehenden Stopfen befestigt.

Besonders vorteilhaft ist es (Anspruch 5), wenn der zweite Schalter ein Wippschalter ist, da dieser in seinem konstruktiven Aufbau besonders einfach und daher kostengünstig herstellbar ist. Da gerade bei diesen Wippschaltern die Ein- bzw. Ausstellung dann, wenn keine Leuchtanzeige vorhanden ist, schlecht erkennbar ist, eignet sich hier die erfindungsgemäße Anordnung besonders gut.

Darüber hinaus erweist es sich als vorteilhaft, für das leistungsverringernde Schaltelement der erfindungsgemäßen Schaltung nach Patentanspruch 1 eine Diode (Anspruch 8) zu verwenden, da diese einerseits relativ billig ist, wenig Raumbedarf hat und andererseits nur eine vernachlässigbare kleine ohmsche Leistung aufnimmt.

Auch bei der erfindungsgemäßen Schaltung nach dem Patentanspruch 9 können die hinsichtlich des Material- und Fertigungsaufwands bereits genannten Vorteile erreicht werden, wobei auch hier eine Entkoppelung des Anzeigezustands der beiden Kontrollampen von der Schaltstellung des ihr jeweils nicht zugeordneten Schalters vorliegt. Es brennen nämlich dann, wenn der erste Schalter eingeschaltet ist, nur die erste Kontrollampe und dann, wenn sowohl der erste Schalter als auch der zweite Schalter geschlossen sind, beide Kontrollampen. Für den Fall, daß lediglich der zweite Schalter geschlossen ist, brennt keine der beiden Kontrollampen.

Diese Schaltung weist darüber hinaus den Vorteil auf, daß lediglich einer der beiden handelsüblichen Schalter - nämlich der zweite Schalter - erfindungsgemäß ausgebildet zu werden braucht, der vorteilhafterweise (Anspruch 10) wiederum mit einem Zusatzkontakt versehen werden kann, was den Fertigungs- und Materialaufwand weiter vermindert.

Wird der zweite Schalter in Bezug auf seine Bauweise ebenfalls nach den Ansprüchen 3 bis 5 ausgebildet (vgl. Anspruch 11), so entstehen darüber hinaus die bereits vorstehend genannten Vorteile.

Schließlich ist es aufgrund der langen Lebensdauer und ihres geringen Stromverbrauches vorteilhaft, wenn die Kontrollampen als Glimmlampen oder Leuchtdioden ausgeführt werden (Anspruch 12).

Nachstehend wird die Erfindung anhand von zwei Ausführungsbeispielen näher beschrieben. Es zeigen:

Fig. 1 eine nach dem in der DE-OS 28 39 140 für den Kleinmengenbetrieb angegebenen Prinzip arbeitenden Schaltung, die zwei Kontrollampen aufweist, die durch aus dem Stand der Technik bekannte Maßnahmen entkoppelt werden,

Fig. 2 eine nach demselben Prinzip arbeitende Schaltung nach der Erfindung,

Fig. 3 eine nach dem in der EP-Al-0 186 097 angegebenen Prinzip arbeitende, erfindungsgemäße Schaltung,

Fig. 4 eine Draufsicht in das Innere gemäß Pfeilrichtung X nach Fig. 5 auf eine Anordnung zweier für eine Schaltung gemäß Fig. 3 geeigneter Schalter und

Fig. 5 einen Schnitt durch den zweiten Schalter gemäß der Schnittführung V-V in Fig. 4.

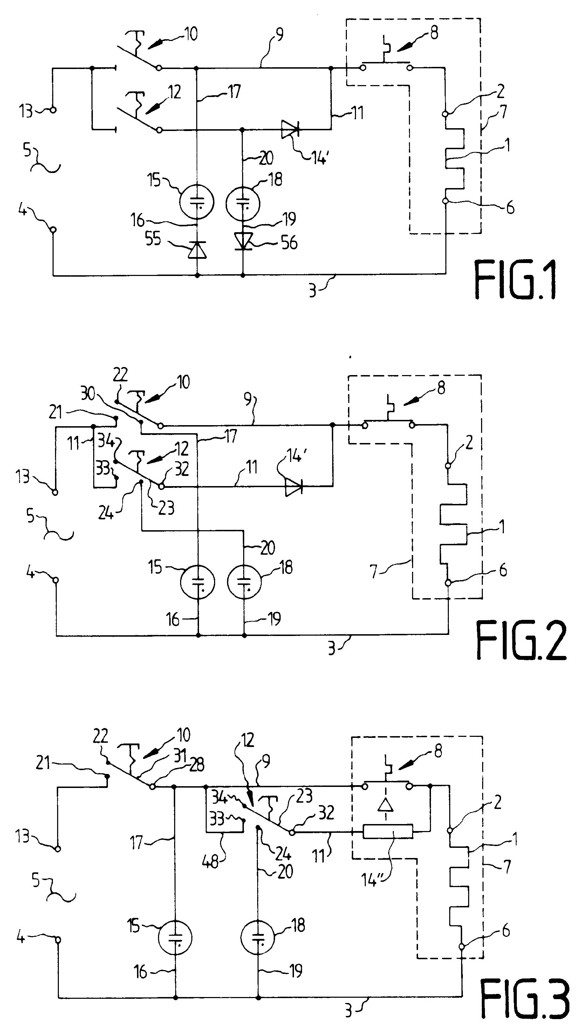

Fig. 1 zeigt einen mit einem ersten elektrischen Anschluß 6 und einem zweiten elektrischen Anschluß 2 versehenen Heizwiderstand 1, der zum einen mit einem lediglich schematisch gezeichneten Durchlauferhitzer 7 und einem temperaturgesteuerten Regler 8 und zum anderen mit einer nicht dargestellten Warmhalteplatte in thermischem Kontakt steht. Der erste Anschluß 6 des Heizwiderstands 1 ist über eine erste Stromleitung 3 direkt mit dem ersten Pol 4 einer Wechselspannungsquelle 5 verbunden. Der zweite Anschluß 2 des Heizwiderstandes 1 ist mit dem ersten Anschluß des Reglers 8 verbunden. Der andere Anschluß des Reglers 8 ist zum einen über eine Hauptstromleitung 9 und einen ersten Schalter 10 und zum anderen über eine dazu parallelgeschaltete, eine Diode 14' und einen zweiten Schalter 12 aufweisende Nebenstromleitung 11 mit dem zweiten Pol 13 der Wechselspannungsquelle 5 verbunden. Der zweite Schalter 12 hat dabei die eingangs beschriebene Funktion eines Kleinmengenschalters.

Zwischen der Hauptstromleitung 9 und der ersten Stromleitung 3 sind in Reihe zuerst eine erste Kontrollampe 15 mit ihrem ersten Anschluß 16 und ihrem zweiten Anschluß 17 und anschließend eine Diode 55 geschaltet. In gleicher Weise ist in der Nebenstromleitung 11 zwischen dem zweiten Schalter 12 und der Diode 14' einerseits und der ersten Stromleitung 3 andererseits wiederum in Reihe eine zweite Kontrollampe 18 mit ihrem ersten Anschluß 19 und ihrem zweiten Anschluß 20 und eine weitere Diode 56 geschaltet.

Diese Schaltung weist gegenüber der aus der DE-OS 28 39 140 bekannten Schaltung eine weitere Kontrollampe auf. Die beiden Dioden 55, 56 dienen zur Entkopplung der Anzeigezustände der beiden Kontrollampen 15, 18 vom Schaltzustand des jeweils nicht zugehörigen Schalters. Nur durch Verwendung der beiden Dioden 55, 56 ist es nämlich möglich, daß die erste Kontrollampe 15 die jeweilige Schaltstellung des ersten Schalters 10 und die zweite Kontrollampe 18 die jeweilige Schaltstellung des zweiten Schalters 12 wiedergibt. Ohne die Diode 55 würde bei geöffnetem ersten Schalter 10 und geschlossenem zweiten Schalter 12 nämlich für den Fall, daß die Diode 14' durchlässig ist (positive Halbwelle am zweiten Pol 13 der Wechselspannungsquelle 5), auch die erste Kontrollampe 15 an der Wechselspannung liegen und daher aufleuchten. Ebenso würde bei nicht vorhandener Diode 56 und geschlossenem ersten Schalter 10, aber geöffnetem zweiten Schalter 12, für den Fall, daß die Phase der Wechselspannungsquelle am Pol 4 liegt und eine negative Halbwelle ansteht, es dazu kommen, daß die zweite Kontrollampe 18 ebenfalls aufleuchten würde.

Die in Fig. 2 angegebene Schaltung entspricht weitestgehend der in Fig. 1 gezeigten Schaltung, weshalb für die übereinstimmenden

Teile auch die dieselben Bezugszeichen verwendet worden sind. Der wesentliche Unterschied der in der Fig. 2 gezeigten Schaltung gegenüber der in der Fig. 1 gezeigten Schaltung besteht darin, daß zum einen die beiden Dioden 55, 56 gemäß Fig. 1 entfallen und daß zum anderen die beiden zweiten Anschlüsse 17 bzw. 20 der ersten bzw. zweiten Kontrollampe 15 bzw. 18 nicht fest mit der Hauptstromleitung 9 bzw. der Nebenstromleitung 11 verbunden sind, sondern mit dieser erst durch Schließen des ersten Schalters 10 bzw. zweiten Schalters 12 verbunden werden.

Auch bei der in der Fig. 3 gezeigten, das zweite Ausführungsbeispiel der Erfindung betreffenden Schaltung werden für diejenigen Bauteile, die den in der Fig.1 gezeigten Bauteilen entsprechen, die gleichen Bezugsziffern verwendet. Das Funktionsprinzip für den Kleinmengenbetrieb besteht hier darin, daß bei geschlossenem ersten und zweiten Schalter 10 und 12 nach Abschluß des Brühvorgangs dann, wenn sich der temperaturabhängige Regler 8 geöffnet hat, der Heizwiderstand 1 praktisch keine Heizleistung mehr abgibt, da eine mit ihm in Reihe geschaltete Hilfsheizung 14″ einen wesentlich größeren Widerstandswert aufweist.

Schließt sich der Regler aufgrund der Abkühlung der Warmhalteplatte bzw. des Durchlauferhitzers 7 wieder, wird die Nebenstromleitung 11 wieder überbrückt, so daß am Heizwiderstand 1 wieder die volle Wechselspannung anliegt und dieser demgemäß auch wieder die volle Heizleistung abgibt. Die Zeitspanne, nach der sich der mit der Hilfsheizung 14″ thermisch gekoppelten Regler 8 wieder schließt, wird durch den von der Hilfsheizung 14″ ausgehenden Wärmestrom verlängert. Dadurch wird die Warmhalteplatte nach Abschluß des Brühvorgangs im zeitlichen Mittel weniger beheizt, so daß kleine Kaffeemengen schonend warmgehalten werden.

Auch bei dieser Schaltung wird der zweite Anschluß 20 der zweiten Kontrollampe 18 erst durch Schließen des zweiten Schalters 12 mit der Nebenstromleitung 11 verbunden. Dies hat zur Folge, daß die zweite Kontrollampe 18 und die erste Kontrollampe 15 nur aufleuchten können, wenn der ihr zugeordnete, zweite Schalter 12 bzw. erste Schalter 10 geschlossen ist. Bei geschlossenem ersten Schalter 10 und geöffnetem zweiten Schalter 12 - eine Schaltstellung, die für die Zubereitung von normalen Kaffeemengen verwendet wird - leuchtet nur die erste Kontrollampe 15 auf. Wird bei geöffnetem ersten Schalter 10 der zweite Schalter 12 geschlossen, leuchtet keine der beiden Kontrollampen auf, da die Kaffeemaschine bei dieser Schalterstellung weder im Kleinmengenbetrieb noch im Betriebszustand für die Herstellung normaler Kaffeemengen arbeitet.

Bei der in Fig. 3 dargestellten Schaltung können sowohl für den ersten Schalter 10 als auch für den zweiten Schalter 12 Standardschalter verwendet werden, wobei an dem ersten Schalter 10 keine Änderungen vorgenommen werden müssen, sondern lediglich am zweiten Schalter 12 ein Zusatzkontakt vorgesehen werden muß.

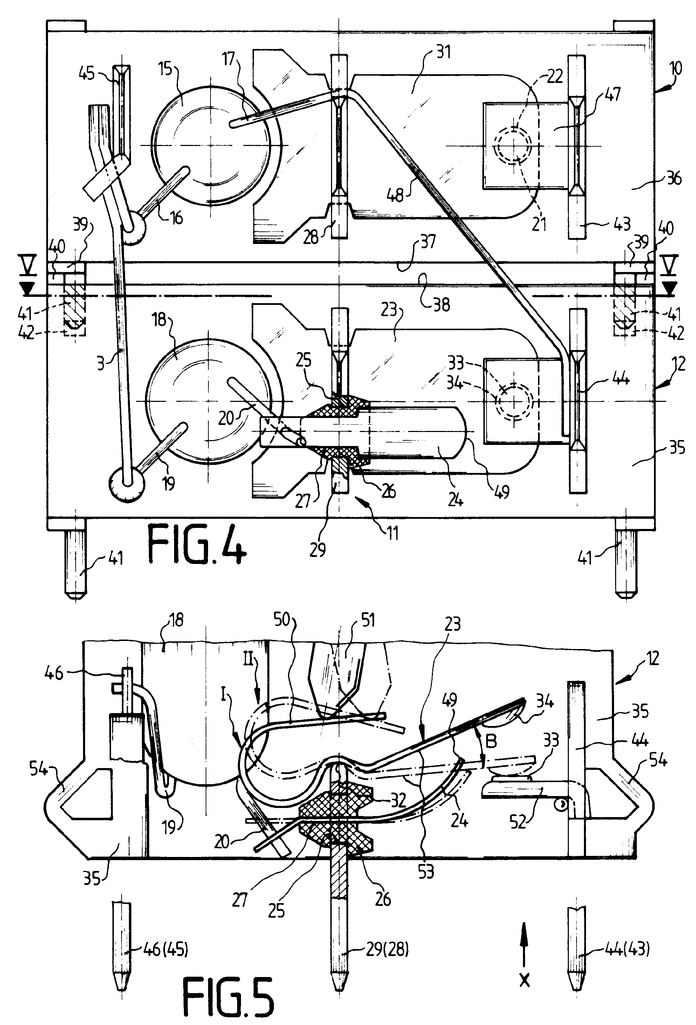

In den Fig. 4 und 5 ist ein Ausführungsbeispiel für eine Anordnung der beiden Schalter 10 und 12 dargestellt, die für eine elektrische Schaltung gemäß Fig. 3 geeignet sind.

In Fig. 4 ist eine Unteransicht des Gehäuses 35 des Schalters 12 und des Gehäuses 36 des Schalters 10 dargestellt. Beide Schalter 10, 12 weisen an ihren zugewandten Seitenflächen 37, 38 zu beiden Enden Vorsprünge 39, 40, an denen die Schalter 10, 12 aneinanderliegen und über beispielsweise an den Vorsprüngen 39 des Schalters 10 angeformte Zapfen 41, die in am zweiten Schalter 12 ausgebildete Bohrungen 42 reibschlüssig hineinragen, formschlüssig miteinander verbunden sind. Auf diese Weise können viele Schalter auf einfache Weise aneinandergesteckt werden. Beide Schalter 10, 12 weisen jeweils drei parallel zueinander verlaufende und aus den Gehäusen 35, 36 nach unten (Fig. 5) herausragende Kontaktklemmen 45, 46; 28, 29 und 43, 44 auf.

Die Kontaktklemme 43, die mit der ersten Kontaktfläche 21 über den quer verlaufenden Steg 47 verbunden ist, stellt die Verbindung zum zweiten Pol 13 her. Die Kontaktklemme 28 stellt die Verbindung zur Hauptstromleitung 9 her. Genau wie in Fig. 5 dargestellt, stützt sich am freien Ende im Gehäuse an der Kontaktklemme 28 eine als Wippe ausgebildete Schenkelfeder 31 ab, die identisch mit der Wippe 23 in Fig. 5 ist. Die Wippe 31 weist an ihrem freien Ende die zweite Kontaktfläche 22 auf, die bei geöffnetem Schalter 10 in geringem Abstand von der ersten Kontaktfläche 21 entfernt ist. Links von der Wippe 31 ist in einer in der Zeichnung nicht näher dargestellten Aufnahmeöffnung die Kontrollampe 15 gelagert, die über den ersten Anschluß 16 und den zweiten Anschluß 17 mit elektrischer Energie bei eingeschaltetem Schalter 10 versorgt wird. Der erste Anschluß 16 ist mit der Kontaktfahne 45 verbunden, die wiederum die Verbindung zum ersten Pol 4 herstellt (siehe hierzu auch Fig. 3). Der zweite Anschluß 17 (Fig. 3, 4 und 5) ist mit der Kontaktklemme 28 und gleichzeitig über die Verbindungsleitung 48 mit der Kontaktklemme 44, die mit der ersten Kontaktfläche 33 des zweiten Schalters 12 in Kontakt steht, verbunden. Der erste Anschluß 16 ist weiterhin über die Stromleitung 3 mit dem ersten Anschluß 19 der zweiten Kontrollampe 18 verbunden.

Die beiden Schalter 10, 12 sind mit Ausnahme der Anschlußleitungen und der Integration des Zusatzkontaktes 24 mit seiner Befestigung im zweiten Schalter 12 identisch, so daß, was die Funktionsweise und Ausbildung der Wippe 31 und seiner Lageranordnung anbelangt, nur anhand des zweiten Schalters 12 erläutert wird.

Gemäß Fig. 4 und 5 stellt die Kontaktklemme 46 die Verbindung zur Stromleitung 3 und somit zum ersten Pol 4 her. Da der erste und zweite Schalter 10, 12 über die Leitung 3 (Fig. 3 und 4) miteinander verbunden sind, kann daher zum Zwecke der Einsparung eine der beiden Kontaktklemmen 45 oder 46 entfallen. Damit würden aber wieder im Anschlußbereich unterschiedliche Schalter entstehen, was nicht unbedingt bei großen Stückzahlen eine Einsparung sein muß. Die Kontaktklemme 46 ist über den ersten Anschluß 19 mit der zweiten Kontrollampe 18 verbunden. Der zweite Anschluß 20 der zweiten Kontrollampe 18 ist mit dem Zusatzkontakt 24 verbunden, der, wie dies die Fig. 4 und 5 deutlich zeigen, in einer Bohrung 27 des Stopfens 26 befestigt ist, der wiederum in einer in der Kontaktklemme 29 ausgebildeten Öffnung 25 eingeknöpft ist. Der Stopfen 26 wird in der Öffnung 25 so zusammengedrückt, daß die Wandung der Bohrung 27 reibschlüssig an der Oberfläche der Kontaktfeder 24 anliegt und diese somit ortsfest mit der Kontaktklemme 29 verbindet.

Das freie Ende 49 der Kontaktfeder 24 ragt in den Schwenkbereich B des Schaltglieds 23 hinein. An dem gebogenen freien Ende 50 des Schaltgliedes 23 greift das Ende des Schaftes 51 der Betätigungswippe (in der Zeichnung nicht dargestellt) des zweiten Schalters 12 an. Die Betätigungswippe weist eine ebenfalls nicht dargestellte Ausnehmung auf, die von einem vorzugsweise farbigen, lichtdurchlässigen Fenster verschlossen ist. Unter diesem Fenster befindet sich die zweite Kontrollampe 18, so daß bei eingeschaltetem Schalter 12 das Licht der zweiten Kontrollampe 18 durch das Fenster hindurchdringt und einer Bedienungsperson anzeigt, ob der Schalter ein- oder ausgeschaltet ist.

Die Ausschaltstellung I des zweiten Schalters 12 wird in Fig. 5 durch die durchgezogenen Linien des Schaftes 51, des Schaltgliedes 23 und der Kontaktfeder 24 angezeigt. Die Einschaltstellung II wird durch die gestrichelten Linien des Schaftes 51, des Schaltgliedes 23 und der Kontaktfeder 24 dargestellt. Wird also der zweite Schalter 12 von seiner Ausschaltstellung I in seine Einschaltstellung II durch Verschwenken des Schaftes 51 gebracht, so dreht sich das Schaltglied 23 um seinen Auflagerpunkt 32 auf der Kontaktklemme 29 im Uhrzeigersinn solange, bis die Kontaktfläche 34 auf der ersten Kontaktfläche 33 des zweiten Schalters 12 aufliegt und somit über den Steg 52 eine Stromverbindung zur Kontaktklemme 44 hergestellt wird. Zuvor gerät jedoch erst das freie Ende 49 der Kontaktfeder 24 in Berührung mit der Unterseite 53 des Schaltgliedes 23, so daß, bevor die Kontaktfläche 33, 34 miteinander verbunden sind, bereits eine Verbindung von dem Schaltglied 23 zum zweiten Anschluß 20 der zweiten Kontrollampe 18 hergestellt ist.

Die seitlich an den Schaltern 10, 12 ausgebildeten Führungsstege 54 dienen zur Befestigung, Führung und als Anschlag in einer hierfür vorgesehenen Ausnehmung eines Gehäuses einer Kaffeemaschine.

## Patentansprüche

1. Brühgetränkemaschine mit einem elektrisch betriebenen Durchlauferhitzer (7) und einem mit diesem und einer Warmhalteplatte thermisch gekoppelten Heizwiderstand (1), der mit seinem ersten Anschluß (6) über einen Stromleiter (3) direkt mit dem ersten Pol (4) einer Spannungsquelle (5) verbunden ist und dessen zweiter Anschluß (2) mittels eines ersten (10) und zweiten Schalters (12) entweder über eine Hauptstromleitung (9) oder über eine Nebenstromleitung (11) mit dem zweiten Pol (13) der Spannungsquelle (5) verbindbar ist und mit einer ersten Kontrollampe (15), deren erster Anschluß (16) mit dem Stromleiter (3) verbunden ist und deren zweiter Anschluß (17) durch Schließen des ersten Schalters (10) mit dem zweiten Pol (13) der Spannungsquelle (5) verbindbar ist, wobei die Nebenstromleitung (11) ein die Heizleistung des Heizwiderstandes (1) verringerndes Schaltelement (14') aufweist,
**dadurch gekennzeichnet,**
daß der zweite Anschluß (17) der ersten Kontrollampe (15) bei geöffnetem ersten Schalter (10) blind endet und erst durch Schließen des ersten Schalters (10) mit der Hauptstromleitung (9) verbunden wird und daß eine zweite Kontrollampe (18) vorhanden ist, deren erster Anschluß (19) mit dem Stromleiter (3) verbunden ist, deren zweiter Anschluß (20) bei geöffnetem zweiten Schalter (12) ebenfalls blind endet und auch erst durch Schließen des zweiten Schalters (12) mit der Nebenstromleitung (11) verbunden wird.

2. Brühgetränkemaschine nach Anspruch 1,
**dadurch gekennzeichnet,**
daß der zweite Schalter (12) neben einer ersten (33) und zweiten (34) Kontaktfläche noch einen mit dem zweiten Anschluß (20) der zweiten Kontrollampe (18) elektrisch verbundenen Zusatzkontakt (24) aufweist, der beim Schließvorgang zuerst mit der Nebenstromleitung (11) verbunden wird, bevor beide Kontaktflächen (33, 34) miteinander verbunden werden.

3. Brühgetränkemaschine nach Anspruch 2,
**dadurch gekennzeichnet,**
daß die Nebenstromleitung (11) mit der zweiten Kontaktfläche (34) und der zweite Pol (13) der Spannungsquelle (5) mit der ersten Kontaktfläche (33) des zweiten Schalters (12) verbunden ist, daß die beiden Kontaktflächen (33, 34) durch die Bewegung eines elektrisch leitenden Schaltgliedes (23) in Verbindung gebracht werden können und daß der Zusatzkontakt (24) aus einer Kontaktfeder besteht, die im Gehäuse (35) des zweiten Schalters (12) ortsfest angeordnet ist und in den Bewegungsbereich des Schaltgliedes (23) hineinragt und die bei Bewegung des Schaltgliedes (23) in Schließrichtung des zweiten Schalters (12) am Schaltglied (23) federnd zur Anlage gelangt, bevor das Schaltglied (23) die erste (33) mit der zweiten Kontaktfläche (34) verbindet.

4. Brühgetränkemaschine nach Anspruch 3,

EP 0 361 073 B1

dadurch gekennzeichnet,
daß die ortsfeste Befestigung der Kontaktfeder (24) an einer mit dem zweiten Anschluß (20) elektrisch verbundenen und im zweiten Schalter (12) ausgebildeten Kontaktklemme (29) dadurch erfolgt, daß die Kontaktklemme (29) des zweiten Schalters (12) eine Öffnung (25) aufweist, daß in der Öffnung (25) ein elektrisch isolierender, gummielastischer Stopfen (26) befestigt ist und daß der Stopfen (26) eine Bohrung (27) aufweist, in der die Kontaktfeder (24) reibschlüssig gehalten wird.

5. Brühgetränkemaschine nach Anspruch 4,
dadurch gekennzeichnet,
daß der zweite Schalter (12) ein Wippschalter ist.

6. Brühgetränkemaschine nach Anspruch 1,
dadurch gekennzeichnet,
daß auch der erste Schalter (10) neben einer ersten und zweiten Kontaktfläche (21, 22) noch einen mit dem zweiten Anschluß (17) der ersten Kontrollampe (15) elektrisch verbundenen Zusatzkontakt aufweist, der beim Schließvorgang zuerst mit der Hauptstromleitung (9) verbunden wird, bevor beide Kontaktflächen (21, 22) miteinander verbunden werden.

7. Brühgetränkemaschine nach Anspruch 1,
dadurch gekennzeichnet,
daß auch der erste Schalter (10) in Bezug auf seine Bauweise nach dem kennzeichnenden Teil der Ansprüche 3 bis 5 ausgebildet ist.

8. Brühgetränkemaschine nach Anspruch 1,
dadurch gekennzeichnet,
daß das leistungsverringernde Schaltelement eine Diode (14') ist und daß vom Heizwiderstand (1) bei geschlossenem ersten Schalter (10) und bei geöffnetem zweiten Schalter (12) die volle Heizleistung und bei geschlossenem zweiten Schalter (12) und geöffnetem ersten Schalter (10) die verringerte Heizleistung abgegeben wird.

9. Brühgetränkemaschine mit einem elektrisch betriebenen Durchlauferhitzer und einem mit diesem und einer Warmhalteplatte thermisch gekoppelten Heizwiderstand (1), der mit seinem ersten Anschluß (6) über einen Stromleiter (3) direkt mit dem ersten Pol (4) einer Spannungsquelle (5) verbunden ist und dessen zweiter Anschluß (2) über eine Hauptstromleitung (9) und einen ersten Schalter (10) mit dem zweiten Pol (13) der Spannungsquelle (5) verbindbar ist, wobei die Hauptstromleitung (9) einen mit dem Durchlauferhitzer (7) thermisch gekoppelten Regler (8) aufweist, der sich erst nach Beendigung des Aufbrühvorgangs soweit erhitzen kann, daß er die über die Hauptstromleitung (9) erfolgende Spannungsversorgung des Heizwiderstands (1) für eine von der Abkühlung des Durchlauferhitzers (7) und seiner thermischen Kopplung mit dem Regler (8) abhängigen Zeitspanne unterbricht und wobei der Hauptstromleitung (9) eine Nebenstromleitung (11) parallel geschaltet ist, die in Serie geschaltet einen zweiten Schalter (12) und eine thermisch mit dem Regler (8) gekoppelte elektrische Hilfsheizung (14'') enthält, deren Widerstandswert wesentlich größer als der des Heizwiderstandes (1) ist, und mit einer Kontrollampe (15), deren erster Anschluß (16) mit dem Stromleiter (3) verbunden ist und deren zweiter Anschluß (17) durch Schließen des ersten Schalters (10) mit dem zweiten Pol (13) der Spannungsquelle (5) verbindbar ist,
dadurch gekennzeichnet,
daß eine zweite Kontrollampe (18) vorhanden ist, deren erster Anschluß (19) mit dem Stromleiter (3) verbunden ist und daß der zweite Anschluß (20) der zweiten Kontrollampe (18) bei geöffnetem zweiten Schalter (12) blind endet und erst durch Schließen des zweiten Schalters (12) mit der Nebenstromleitung (11) verbunden wird.

10. Brühgetränkemaschine nach Anspruch 9,
dadurch gekennzeichnet,
daß der zweite Schalter (12) nach dem kennzeichnenden Teil von Anspruch 2 ausgebildet ist.

11. Brühgetränkemaschine nach Anspruch 10,
dadurch gekennzeichnet,
daß der zweite Schalter (12) in Bezug auf seine Bauweise nach dem kennzeichnenden Teil der Ansprüche 3 bis 5 ausgebildet ist.

12. Brühgetränkemaschine nach Anspruch 1 oder 9,
dadurch gekennzeichnet,
daß die Kontrollampen (15, 18) Glimmlampen oder Leuchtdioden sind.

## Claims

1. A beverage brewer comprising an electrically operated flow-through heater (7) and a heating resistor

7

(1) thermally coupled to said heater and to a warming plate, said heating resistor having a first lead (6) directly connected to a first terminal (4) of a power source (5) via an electric conductor (3), and a second lead (2) adapted to be connected to a second terminal (13) of the power source (5) by means of a first (10) and a second (12) switch via either a main conductor (9) or a secondary conductor (11), a first pilot lamp (15) having a first lead (16) connected to the electric conductor (3) and a second lead (17) adapted to be connected to the second terminal (13) of the power source (5) by closing of the first switch (10), the secondary conductor (11) including a switching element (14') for reducing the heating power of the heating resistor (1),
**characterized in that**
the second lead (17) of the first pilot lamp (15) is dead-ended in the open condition of the first switch (10) and is not connected to the main conductor (9) until the first switch (10) is closed, and that a second pilot lamp (18) is provided having a first lead (19) connected to the electric conductor (3) and a second lead (20) dead-ended with the second switch (12) in the open position, and is not connected to the secondary conductor (11) until the second switch (12) is closed.

2. The beverage brewer as claimed in claim 1,
**characterized in that**
the second switch (12), in addition to having a first (33) and a second (34) contact surface, includes an additional contact (24) which is electrically connected to the second lead (20) of the second pilot lamp (18) and which, as it closes, is connected to the secondary conductor (11) before contact is established between the first and second contact surfaces (33, 34).

3. The beverage brewer as claimed in claim 2,
**characterized in that**
the secondary conductor (11) is connected to the second contact surface (34) and the second terminal (13) of the power source (5) is connected to the first contact surface (33) of the second switch (12), that the first and second contact surfaces (33, 34) are adapted to be connected by the movement of an electrically conducting contact member (23), and that the additional contact (24) is comprised of a contact spring fixedly located in the housing (35) of the second switch (12) and extending into the range of motion of the contact member (23), said spring resiliently engaging the contact member (23) on movement of the contact member (23) in the closing direction of the second switch (12) before the contact member (23) establishes contact between the first (33) and second (34) contact surfaces.

4. The beverage brewer as claimed in claim 3,
**characterized in that**
the fixed location of the contact spring (24) on a contact terminal (29) electrically connected to the second lead (20) and provided in the second switch (12) is accomplished in that the contact terminal (29) of the second switch (12) has an opening (25), that an electrically insulating, rubber-elastic plug member (26) is mounted in said opening (25), and that the plug member (26) includes a bore (27) in which the contact spring (24) is held by frictional engagement therewith.

5. The beverage brewer as claimed in claim 4,
**characterized in that**
the second switch (12) is a rocker switch.

6. The beverage brewer as claimed in claim 1,
**characterized in that**
also the first switch (10), in addition to having first (21) and second (22) contact surfaces, includes an additional contact which is electrically connected to the second lead (17) of the first pilot lamp (15) and which, as it closes, is connected to the main conductor (9) before contact is established between the first and second contact surfaces (21, 22).

7. The beverage brewer as claimed in claim 1,
**characterized in that**
also the first switch (10) is constructed in accordance with the characterizing portions of claims 3 to 5.

8. The beverage brewer as claimed in claim 1,
**characterized in that**
the power-reducing switching element is a diode (14'), and that the heating resistor (1) delivers the full heating power when the first switch (10) is closed and the second switch (12) is open, reducing the delivered heating power when the second switch (12) is closed and the first switch (10) is open.

9. A beverage brewer comprising an electrically operated flow-through heater and a heating resistor (1) thermally coupled to said heater and to a warming plate, said heating resistor having a first lead (6) directly connected to the first terminal (4) of a power source (5) via an electric conductor (3) and a second lead (2) adapted to be connected to the second terminal (13) of the power source (5) via a main conductor (9) and a first switch (10), with the main conductor (9) including a regulator (8) thermally coupled to the flow-through hea-

8

ter (7) and adapted to heat up after completion of a brewing cycle such as to interrupt the supply of power from the main conductor (9) to the heating resistor (1) for a period of time dependent on the cooling off of the flow-through heater (7) and its thermal coupling to the regulator (8), the main conductor (9) being connected in parallel with a secondary conductor (11) including a serially connected second switch (12) and a supplemental electrical heating device (14″) thermally coupled to the regulator (8), the resistance of the supplemental device being substantially greater than that of the heating resistor (1), and a pilot lamp (15) having a first lead (16) connected to the electric conductor (3) and a second lead (17) adapted to be connected to the second terminal (13) of the power source (5) by closing of the first switch (10),

**characterized in that**

a second pilot lamp (18) is provided having a first lead (19) connected to the electric conductor (3) and a second lead (20) of the second pilot lamp (18) being dead-ended when the second switch (12) is open and connected to the secondary conductor (11) when the second switch (12) is closed.

10. The beverage brewer as claimed in claim 9,

**characterized in that**

the second switch (12) is configured according to the characterizing portion of claim 2.

11. The beverage brewer as claimed in claim 10,

**characterized in that**

the second switch (12) is constructed in accordance with the characterizing portions of claims 3 to 5.

12. The beverage brewer as claimed in claim 1 or claim 9,

**characterized in that**

the pilot lamps (15, 18) are glow lamps or light-emitting diodes.


**Revendications**

1. Machine à préparer des boissons chaudes, comportant un chauffe-eau à écoulement libre (7) et, thermiquement couplée à celui-ci et à une plaque de maintien au chaud, une résistance de chauffage (1) qui, par sa première borne de connexion (6) est directement reliée, via un conducteur (3), au premier pôle (4) d'une source de tension (5) et qui, par sa deuxième borne de connexion (2), peut être reliée au deuxième pôle (13) de la source de tension (5), cela au moyen d'un premier interrupteur (10) et d'un deuxième interrupteur (12), soit par l'intermédiaire d'une ligne de courant principal (9) soit par l'intermédiaire d'une ligne de courant secondaire (11), ladite machine à préparer des boissons chaudes comportant en outre une première lampe-témoin (15) dont la première borne de connexion (16) est reliée au conducteur (3) et dont la deuxième borne de connexion (17) peut être reliée au deuxième pôle (13) de la source de tension (5) par fermeture du premier interrupteur (10), la ligne de courant secondaire (11) présentant un composant (14′) réduisant la puissance de chauffage de la résistance de chauffage (1),

caractérisée

par le fait que la deuxième borne de connexion (17) de la première lampe-témoin (15) est "en l'air" lorsque le premier interrupteur (10) est ouvert et n'est connectée à la ligne de courant principal (9) que par la fermeture du premier interrupteur (10), et par le fait qu'il est prévu une deuxième lampe-témoin (18) dont la première borne de connexion (19) est reliée au conducteur (3) et dont la deuxième borne de connexion (20) est également "en l'air" lorsque le deuxième interrupteur (12) est fermé et n'est reliée à la ligne de courant secondaire (11) que par la fermeture du deuxième interrupteur (12).

2. Machine à préparer des boissons chaudes selon revendication 1,

caractérisée

par le fait que le deuxième interrupteur (12) présente, en plus d'une première surface de contact (33) et d'une deuxième surface de contact (34), un contact supplémentaire (24) électriquement relié à la deuxième borne de connexion (20) de la deuxième lampe-témoin (18), ce contact supplémentaire (24) étant d'abord relié, lors d'un processus de fermeture, à la ligne de courant secondaire (11) avant que les deux surfaces de contact (33, 34) soient reliées l'une à l'autre.

3. Machine à préparer des boissons chaudes selon revendication 2,

caractérisée

par le fait que la ligne de courant secondaire (11) est reliée à la deuxième surface de contact (34) et le deuxième pôle (13) de la source de tension (5) est relié à la première surface de contact (33) du deuxième interrupteur (12), par le fait que les deux surfaces de contact (33, 34) peuvent être mises en communication par le mouvement d'un composant de commutation électriquement conducteur (23), et par le fait que le contact supplémentaire (24) est constitué par un ressort de contact qui est agencé fixe dans l'enveloppe (35) du deuxième interrupteur (12) et qui déborde dans le domaine de déplacement du composant de commutation (23) et, lors du mouvement de ce dernier (23) dans la direction de fermeture du deuxième interrupteur (12), vient s'appliquer élastiquement contre le composant de commutation (23) avant que celui-ci (23) relie la première surface de contact (33) à la deuxième surface de contact (34) .

4. Machine à préparer des boissons chaudes selon revendication 3,
caractérisée
par le fait que l'assujettissement fixe du ressort de contact (24) à une borne de contact (29) électriquement reliée à la deuxième borne de connexion (20) et aménagée dans le deuxième interrupteur (12) est réalisé par le fait que la borne de contact (29) du deuxième interrupteur (12) présente une ouverture (25), par le fait qu'un bouchon électriquement isolant (26), ayant l'élasticité d'un caoutchouc, est fixé dans l'ouverture (25), et par le fait que ce bouchon (26) présente un trou (27) dans lequel le ressort de contact (24) est maintenu par une liaison par frottement.

5. Machine à préparer des boissons chaudes selon revendication 4,
caractérisée
par le fait que le deuxième interrupteur (12) est un interrupteur à bascule.

6. Machine à préparer des boissons chaudes selon revendication 1,
caractérisée
par le fait que le premier interrupteur (10) présente aussi, en plus d'une première et d'une deuxième surface de contact (21, 22), un contact supplémentaire électriquement relié à la deuxième borne de connexion (17) de la première lampe-témoin (15), ce contact supplémentaire étant, lors du processus de fermeture, d'abord relié à la ligne de courant principal (9) avant que les deux surfaces de contact (21, 22) soient reliées l'une à l'autre

7. Machine à préparer des boissons chaudes selon revendication 1,
caractérisée
par le fait que le premier interrupteur (10) est lui aussi réalisé selon la partie caractérisante des revendications 3 à 5, pour ce qui est de son type de construction.

8. Machine à préparer des boissons chaudes selon revendication 1,
caractérisée
par le fait que le composant réduisant la puissance est une diode (14') et par le fait que la résistance de chauffage (1) fournit la pleine puissance de chauffage lorsque le premier interrupteur (10) est fermé et le deuxième interrupteur (12) ouvert, et fournit la puissance de chauffaqe réduite lorsque le deuxième interrupteur (12) est fermé et le premier interrupteur (10) ouvert.

9. Machine à préparer des boissons chaudes comportant un chauffe-eau à écoulement libre, opérant électriquement, et une résistance de chauffage (1) thermiquement couplée à celui-ci et à une plaque de maintien au chaud, cette résistance étant, par sa première borne de connexion (6), directement reliée, par l'intermédiaire d'un conducteur (3), au premier pôle (4) d'une source de tension (5) et pouvant être reliée, par sa deuxième borne de connexion (2) et par une ligne de courant principal (9) et par un premier interrupteur (10), au deuxième pôle (13) de la source de tension (5), la ligne de courant principal (9) présentant un régulateur (8) qui est thermiquement couplé au chauffe-eau rapide à écoulement libre (7) et qui, seulement après la fin de l'échaudage, peut s'échauffer au point d'interrompre la fourniture de tension faite par l'intermédiaire de la ligne de courant principal (9) à la résistance de chauffage (1), cette interruption durant un laps de temps qui dépend du refroidissement du chauffe-eau à écoulement libre (7) et de son couplage thermique au régulateur (8), la ligne de courant principal (9) étant accompagnée, en parallèle, par une ligne de courant secondaire (11) qui comporte, branchés en série, un deuxième interrupteur (12) et un chauffage électrique auxiliaire (14") thermiquement couplé au régulateur (8) et doté d'une résistance dont la valeur est sensiblement supérieure à celle de la résistance de chauffage (1), et une lampe-témoin (15) dont la première borne de connexion (16) est reliée au conducteur (3) et dont la deuxième borne de connexion (17) peut être reliée au deuxième pôle (13) de la source de tension (5) par fermeture du premier interrupteur (10),
caractérisée
par le fait qu'il est prévu une deuxième lampe-témoin (18) dont la première borne de connexion (19) est reliée au conducteur (3) et par le fait que la deuxième borne de connexion (20) de la deuxième lampe-témoin (18) est "en l'air" lorsque le deuxième interrupteur (12) est ouvert et n'est reliée à la ligne de courant secondaire (11) que par la fermeture du deuxième interrupteur (12).

10. Machine à préparer des boissons chaudes selon revendication 9,
caractérisée
par le fait que le deuxième interrupteur (12) est réalisé conformément à la partie caractérisante de la revendication 2.

11. Machine à préparer des boissons chaudes selon revendication 10,
caractérisée
par le fait que, pour ce qui est de son type de construction, le deuxième interrupteur (12) est réalisé conformément à la partie caractérisante des revendications 3 à 5.

12. Machine à préparer des boissons chaudes selon revendication 1 ou 9, caractérisée
par le fait que les lampes-témoins (15, 18) sont des diodes électroluminescentes ou des lampes à effluve.

FIG.1

FIG.2

FIG.3

EP 0 361 073 B1

FIG.4

FIG.5

13